(19) **Europäisches Patentamt**

**European Patent Office**

**Office européen des brevets**

(11) **EP 0 776 806 B2**

(12) **NEUE EUROPÄISCHE PATENTSCHRIFT**

(45) Veröffentlichungstag und Bekanntmachung des Hinweises auf die Entscheidung über den Einspruch:
**19.01.2005 Patentblatt 2005/03**

(51) Int Cl.$^7$: **B60T 8/00**

(45) Hinweis auf die Patenterteilung:
**02.05.2002 Patentblatt 2002/18**

(21) Anmeldenummer: **96116734.3**

(22) Anmeldetag: **18.10.1996**

(54) **Verfahren zur Giermoment-Abschwächung bei einem Antiblockiersystem**

Procedure for yaw rate dumping in antilock braking system

Procédé d'amortissement du couple de fixation dans un système antiblocage

(84) Benannte Vertragsstaaten:
**DE FR IT SE**

(30) Priorität: **02.12.1995 DE 19545001**

(43) Veröffentlichungstag der Anmeldung:
**04.06.1997 Patentblatt 1997/23**

(73) Patentinhaber: **WABCO GmbH & Co. OHG
30453 Hannover (DE)**

(72) Erfinder:
- **Friederichs, Otto**
  **30827 Garbsen (DE)**
- **Köster, Harald**
  **30451 Hannover (DE)**
- **Rode, Konrad**
  **30926 Seelze (DE)**
- **Rosendahl, Hartmut**
  **30167 Hannover (DE)**

(74) Vertreter: **Schrödter, Manfred, Dipl.-Ing.
WABCO GmbH & Co. OHG
Postfach 91 12 62
30432 Hannover (DE)**

(56) Entgegenhaltungen:
DE-A- 4 012 168     DE-A1- 3 626 753
DE-A1- 3 925 828    DE-A1- 4 225 983
DE-C2- 4 034 351

EP 0 776 806 B2

**Beschreibung**

Die Erfindung bezieht sich auf ein Verfahren zur Giermoment-Abschwächung bei einem Antiblockiersystem in einem Fahrzeug gemäß dem Oberbegriff des Patentanspruchs 1.

Bei einer Abbremsung eines Fahrzeugs auf einer Fahrbahn, welche seitenweise unterschiedliche Reibwerte aufweist, entsteht bekanntlich ein Giermoment, welches das Fahrzeug in Richtung auf die Straßenseite mit dem höheren Reibwert hin abzulenken versucht. Diesem Effekt muß der Fahrer durch Gegenlenken begegnen. Dies kann jedoch für ungeübte Fahrer problematisch sein, insbesondere dann, wenn das Giermoment durch ungünstige Umstände besonders hoch ausfällt. Solche Umstände können z. B. ein kurzer Radstand des Fahrzeugs, eine geringe Beladung, besonders stark unterschiedliche Straßenverhältnisse wie z. B. Beton gegenüber Eis, und auch besonders starke Bremsmanover, wie z. B. eine Bremsung mit regelndem Antiblockiersystem (ABS) sein.

Insbesondere bei mit einem ABS ausgerüsteten Fahrzeugen ist es deshalb bereits bekannt, das bei einer Bremsung auf einer Straße mit seitenweise ungleicher Oberfläche (μ-Split) entstehende Giermoment zunächst zeitlich verzögert aufzubauen und dann auf einen konstanten Wert zu begrenzen und damit die Stabilität des Fahrzeugs zu erhöhen und den Fahrer zu entlasten. Dies geschieht durch besondere Maßnahmen innerhalb der Elektronik des ABS (DE-A 28 55 326).

Neuerdings sind Fahrzeuge mit sogenanntem elektronischen Bremssystem (EBS) bekannt, bei denen ein von einem Bremswertgeber stammender Sollwert als Bremsdruck in den Bremszylindern (Istwert) einregelbar ist (DE-A 44 06 235). Auch diese Bremssysteme sind in der Regel mit einem ABS ausgestattet. Da hier zur Erfassung der Bremsdrücke Drucksensoren zur Verfügung stehen, ist es naheliegend, bei einem pneumatischen Bremssystem mit ABS die Bremsdruckdifferenzen ($\Delta P$) zwischen dem Low-Rad auf der glatten Straßenseite und dem High-Rad auf der griffigen Straßenseite zu begrenzen und hiermit eine Giermoment-Abschwachung zu erzielen.

Schließlich ist ein konventionelles ABS bekannt (DE-A 24 60 309), das mit Bremsdruck-Sensoren ausgerüstet ist. Dabei kann das High-Rad vom ABS-regelnden Low-Rad druckmäßig mitgesteuert werden, oder auch der Druck des High-Rades unter Wahrung einer zweckmäßigen mittleren Bremsdruckdifferenz ($\Delta P$) zum Druck des Low-Rades auf einem konstanten Wert gehalten werden.

Nachteilig an den bekannten Anordnungen ist nun, daß die Giermoment-Abschwächung konstant ist, d. h. nicht auf die jeweilige Straßenbeschaffenheit oder das jeweilige Fahrzeug abgestimmt ist. Der maximale Bremsdruck des High-Rades ist nach dem zeitlich verzögertem Aufbau nur von dem durch die Reibkraft des Low-Rades bestimmten Bremsdruckverlauf des Low-Rades abhängig und somit begrenzt. Hierdurch wird die für ein beherrschbares Fahrzeugverhalten maximal zulässige Bremskraft des High-Rades nicht immer ausreichend ausgenutzt. Es ist gegebenenfalls moglich, daß durch eine zu starke Unterbremsung des High-Rades bei wechselnder Beschaffenheit der Straßenoberfläche Bremsweg verschenkt wird.

Unter Umständen ist es aber auch möglich, daß die Bremsdruckdifferenz ($\Delta P$) für kritische Fahrzeuge zu hoch ist, so daß diese dann vom Fahrer nur schwer oder gar nicht beherrschbar sind.

Aus der DE-A 3 925 828 ist ein Antiblockierregelsystem bekannt, bei eine zugelassene Druckdifferenz zwischen den Bremsdrücken des linken und rechten Rades einer Achse vom Druck des low-Rades abhängig ist.

Der Erfindung liegt die Aufgabe zugrunde, ein Verfahren zur Giermoment-Abschwächung bei einem Fahrzeug mit Antiblockiersystem anzugeben, welches einerseits den Fahrer von einem übermäßigen Gegenlenken entlastet, und andererseits den Bremsweg gegenüber den bekannten Systemen verkürzt.

Diese Aufgabe wird durch die im Kennzeichen des Patentanspruchs 1 enthaltene Erfindung gelöst. Die Unteransprüche enthalten zweckmäßige Weiterbildungen.

Durch die Anwendung des erfindungsgemaßen Verfahrens ist eine Giermoment-Abschwachung möglich, die sich den wechselnden Straßenbeschaffenheiten und Fahrzeug-Typen bzw. Beladungen selbständig anpaßt und damit zur Verkürzung des Gesamt-Bremsweges beiträgt. Die Beherrschbarkeit des Fahrzeugs bleibt dabei erhalten.

Die Erfindung wird im folgenden anhand einer Zeichnung näher erläutert.

Dabei zeigen

Fig. 1     ein schematisches Blockschaltbild eines elektronischen Bremssystems (EBS) mit integriertem Antiblockiersystem (ABS);

Fig. 2     ein Diagramm, in welchem die Bremsdrücke ($P_B$) eines Low-Rades und eines High-Rades der Lenkachse über der Zeit (t) aufgetragen sind.

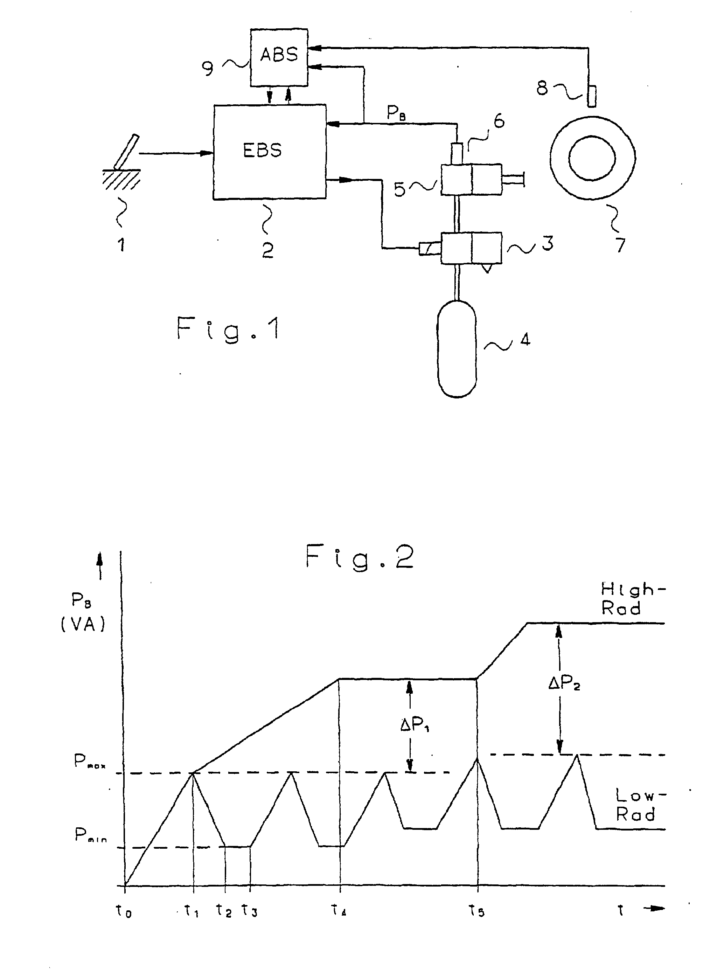

In der Fig. 1 ist ein elektronisches Bremssystem (EBS) schematisch als Blockschaltbild dargestellt. Ein Bremswertgeber (1) mit elektrischem Signalausgang ist an einen Regler (2) (EBS-Elektronik) angeschlossen. Dervom Bremswertgeber (1) stammende Bremsdruck-Sollwert wird im Regler (2) mit einem Bremsdruck-Istwert verglichen, welcher von einem Drucksensor (6) in einem Bremszylinder (5) abgefühlt wird, und dem Regler (2) sowie der ABS-Elektronik (9) als Bremsdruck ($P_B$) zurückgemeldet wird. Der Drucksensor (6) kann auch in einem Regelventil (3) angeordnet sein.

Die jeweilige Regelabweichung wird mittels des vom Regler (2) angesteuerten Regelventils (3), welches an einen Druckluftvorrat (4) angeschlossen ist, ausgeglichen. Mittels des genannten, stetig arbeitenden Regelventils (3) ist es möglich, den Druck im Bremszylinder (5) auf jeden gewünschten Wert von Null bis zum Behälterdruck im Druckluftvorrat (4) einzustellen.

Das dem Bremszylinder (5) zugeordnete Fahrzeugrad (7) ist mit einem Drehzahlsensor (8) versehen. Dieser ist an eine ABS-Elektronik (9) angeschlossen. Die beiden Elektroniken (2) und (9) können uber Verbindungsleitungen Daten austauschen, oder aber das ABS ist als ein im EBS integrierter Bestandteil ausgeführt.

Falls die ABS-Elektronik (9) ein drohendes Blockieren des Rades (7) erkennt, gibt sie entsprechende Signale zum Regler (2), wodurch dieser veranlaßt wird, den zu hohen Bremsdruck abzusenken. Hierdurch wird das Rad vom Bremsdruck entlastet und erhält Gelegenheit, wieder anzulaufen. Sobald sich die Radgeschwindigkeit wieder der Fahrzeuggeschwindigkeit angeglichen hat, kann das Rad wieder mit Bremsdruck beaufschlagt werden. Hierdurch ergeben sich Druck-Regelzyklen, die im Durchschnitt eine Frequenz von etwa 1 Hz aufweisen.

In der Fig 2 ist ein Diagramm dargestellt, in welchem über der Zeit (t) die Bremsdrücke ($P_B$) der Räder der Lenk- bzw. Vorderachse (VA) aufgetragen sind. Wie man erkennt, steigert sich der Bremsdruck ausgehend vom Zeitpunkt ($t_0$), dem Beginn der Bremsung, zunächst für beide Räder der Vorderachse, nämlich dem auf der griffigen Straßenseite laufenden High-Rad und dem auf der glatten Straßenseite laufenden Low-Rad, gleichartig.

Zum Zeitpunkt $t_1$ erkennt das ABS (9) eine Blockierneigung des Low-Rades und veranlaßt eine Bremsdruckabsenkung im Bremszylinder des Low-Rades, die bis zum Zeitpunkt $t_2$ andauert. Der Bremsdruck zum Zeitpunkt $t_1$ ist der sogenannte Abregeldruck ($P_{max}$). Es schließt sich eine Druckhaltephase für das Low-Rad an, bis im Zeitpunkt ($t_3$) mit einer erneuten Drucksteigerung beim Low-Rad ein neuer Regelzyklus beginnt.

Währenddessen steigt der Bremsdruck im High-Rad weiter an, bis er durch die erfindungsgemäße Giermoment-Abschwachung im Zeitpunkt ($t_4$), sobald nämlich eine mittlere Bremsdruckdifferenz ($\Delta P$) zum Low-Rad erreicht ist, konstant gehalten wird. Der Bremsdruckanstieg kann, wie dargestellt, durch entsprechende Signale des ABS (9) zeitlich verzögert werden, um den Giermomentaufbau bei Bremsbeginn zu verlangsamen.

Die Bremsdruckdifferenz ($\Delta P$) ist in der Fig. 2 als Abstand zum Abregeldruck ($P_{max}$) des Low-Rades dargestellt. Sie konnte aber auch als Abstand zu einem mittleren Bremsdruck des Low-Rades, z. B. ($P_{max} + P_{min}$)/2 ($P_{min}$ = Haltedruck), oder als Abstand zum jeweils vorliegenden Bremsdruck des Low-Rades definiert sein.

Die eingeregelte Bremsdruckdifferenz ($\Delta P$) ist nun nicht, wie bisher üblich, konstant, sondern erfindungsgemäß im wesentlichen abhangig von den Abregeldrucken ($P_{max}$) der regelnden Fahrzeugräder , d. h. derjenigen Fahrzeugrader, bei denen die ABS-Regelung gerade arbeitet (Low-Rader). Hierdurch ergibt sich ein variables Verhalten, welches sowohl die Straßenbeschaffenheit als auch das Fahrzeuggewicht berücksichtigt. Versuche und theoretische Überlegungen haben gezeigt, daß das für die Beherrschbarkeit des Fahrzeugs zulässige, am Fahrzeug angreifende Giermoment und damit die Bremsdruckdifferenz ($\Delta P$) um so größer sein darf, je größer das Fahrzeuggewicht und auch je größer der Reibwert zwischen Reifen und Fahrbahn ist.

Wie man in Fig. 2 erkennt, wird im Zeitraum von $t_4$ bis $t_5$ eine Bremsdruckdifferenz $\Delta P_1$ eingestellt. Ab dem Zeitraum $t_5$, wo sich die Straßenverhaltnisse verbessert haben, was am hoheren Abregeldruck $P_{max}$ des Low-Rades erkennbar ist, wird eine höhere Bremsdruckdifferenz $\Delta P_2$ eingestellt. Der Bremsdruck des High-Rades wird also entsprechend erhöht.

Hierdurch ergibt sich der bereits erwähnte verkürzte Bremsweg.

Erfindungsgemäß ist die zulässige Bremsdruckdifferenz ($\Delta P$) proportional zur Summe der Abregeldrücke ($P_{max}$) der beiden Räder der Hinterachse zu berechnen.

Weiterhin kann es zweckmäßig sein, die zulässige Bremsdruckdifferenz ($\Delta P$) proportional zur Summe der Abregeldrücke ($P_{max}$) der beiden Rader der Hinterachse und dem zweifachen Werte des Abregeldruckes ($P_{max}$) des Low-Rades der Lenkachse zu berechnen.

All diese Varianten ergeben andere Lenk-Charakteristiken des Fahrzeugs auf einer μ Split-Fahrbahn und können gegebenenfalls auch vom Fahrzeughersteller durch entsprechende Parametrierung der Elektronik nach Wunsch ausgewählt werden. Die erforderlichen Berechnungen werden ausgeführt von den in den Elektroniken (2, 9) enthaltenen Mikrocomputern.

Der Bremsdruck des High-Rades der Lenkachse wird eingeregelt als Summe des Abregeldruckes ($P_{max}$) am Low-Rad der Lenkachse und der berechneten Bremsdruckdifferenz ($\Delta P$) (siehe Fig. 2).

Der Bremsdruck des High-Rades der Lenkachse kann auch eingeregelt werden als Summe des jeweiligen Bremsdrucks am Low-Rad der Lenkachse und der berechneten Bremsdruckdifferenz ($\Delta P$).

Der zulässige Bremsdruck des High-Rades der Lenkachse kann auch bei Beginn einer ABS-Regelung berechnet werden als Summe des Bremsdrucks am Low-Rad der Lenkachse und der berechneten Druckdifferenz und nach einer bestimmten vorgebbaren Zeit als Summe des Abregeldrucks ($P_{max}$) des Low-Rades der Lenkachse und der berechneten Bremsdruckdifferenz ($\Delta P$).

Bei Fahrzeugen mit einer liftbaren Achse verringert sich die Radlast der Nachbarachse, wenn die Liftachse abgesenkt wird. Durch die Verringerung der Achslast der Antriebsachse verringern sich auch die Abregeldrücke der Antriebsachse. Damit würde gemäß den oben vorgestellten Verfahren die zugelassene Bremsdruckdifferenz an den Rädern der Lenkachse verringert werden, obwohl aufgrund der abgesenkten Liftachse das Fahrzeug auf μ-split Reibwerten stabiler bremst, also eher eine höhere Bremsdruckdifferenz ΔP an den Rädern der Lenkachse möglich wäre, ohne daß das Fahrzeug unbeherrschbar würde. Diesem Nachteil kann zweckmäßig begegnet werden, indem durch ein geeignetes Verfahren eine abgesenkte Liftachse erkannt wird. Dies kann z. B. über eine Sensierung erfolgen, deren Werte an die EBS- oder ABS-Elektronik übergeben werden. Hierdurch ist es möglich, bei als abgesenkt erkannter Liftachse den Wert für die zulassige Bremsdruckdifferenz (ΔP) an den Rädern der Lenkachse entsprechend zu erhöhen.

Der Quotient

$$\frac{\text{Achslast Liftachse} + \text{Achslast Antriebsachse}}{\text{Achslast Antriebsachse}}$$

kann in die Ermittlung des Wertes für die Bremsdruck differenz (ΔP) bei abgesenkter liftachse eingehen.

Schließlich kann es auch noch zweckmaßig sein, zusatzlich auch die Bremsdruckdifferenz der Bremsdrucke der beiden Räder der Hinterachse zu begrenzen. Auch hierbei kann dann die Bremsdruckdifferenz (ΔP) nach einer der oben beschriebenen Varianten berechnet werden. Die Begrenzung an der Hinterachse bietet sich besonders bei solchen Fahrzeugen an, welche auf μ Split-Fahrbahnen besonders instabil sind, wie z. B. Zugfahrzeuge von Sattelschleppern, die ohne Auflieger gefahren werden.

Die oben beschriebene Erfindung ist selbstverständlich auch bei Fahrzeugen mit mehr als einer Lenkachse oder mehr als einer Hinterachse entsprechend anwendbar.

**Patentansprüche**

1. Verfahren zur Giermoment-Abschwächung bei einem Antiblockiersystem (ABS) in einem Fahrzeug, wobei die Bremsdrücke ($P_B$) der Räder (7) mittels Drucksensoren (6) erfaßt werden, und die ABS-Elektronik (9) durch die Ausgangssignale der Drucksensoren (6) derart beeinflußt wird, daß zwischen den Bremsdruckverläufen am High-Rad und am Low-Rad der Lenkachse eine Bremsdruckdifferenz (ΔP) im Mittel nicht überschritten wird, **dadurch gekennzeichnet, daß** die Bremsdruckdifferenz (ΔP) von der ABS-Elektronik (9) abhängig von den Abregeldrücken ($P_{max}$) der Fahrzeugräder, bei denen eine ABS-Regelung läuft, berechnet wird, wobei die Bremsdruckdifferenz (ΔP) proportional der Summe der Abregeldrücke ($P_{max}$) der beiden Räder der Hinterachse ist.

2. Verfahren nach Anspruch 1, **dadurch gekennzeichnet, daß** die Bremsdruckdifferenz (ΔP) proportional der Summe der Abregeldrücke ($P_{max}$) der beiden Räder der Hinterachse und dem zweifachen Wert des Abregeldruckes ($P_{max}$) des Low-Rades der Lenkachse ist

3. Verfahren nach einem odermehreren der Ansprüche 1 bis 2, **dadurch gekennzeichnet, daß** derzulässige Bremsdruck des High-Rades der Lenkachse berechnet wird als Summe des Abregeldruckes ($P_{max}$) am Low-Rad der Lenkachse und der berechneten Bremsdruckdifferenz (ΔP).

4. Verfahren nach einem odermehreren der Ansprüche 1 bis 2, **dadurch gekennzeichnet, daß** derzulässige Bremsdruck des High-Rades der Lenkachse berechnet wird als Summe des Bremsdrucks am Low-Rad der Lenkachse und der berechneten Bremsdruckdifferenz (ΔP).

5. Verfahren nach einem oder mehreren der Ansprüche 1 bis 2, **dadurch gekennzeichnet, daß** der zulässige Bremsdruck des High-Rades der Lenkachse bei Beginn einer ABS-Regelung berechnet wird als Summe des Bremsdrucks am Low-Rad der Lenkachse und der berechneten Druckdifferenz und nach einer bestimmten vorgebbaren Zeit als Summe des Abregeldrucks ($P_{max}$) des Low-Rades der Lenkachse und der berechneten Bremsdruckdifferenz (ΔP).

6. Verfahren nach einem oder mehreren der Ansprüche 1 bis 5, bei einem Fahrzeug mit Liftachse, **dadurch gekennzeichnet, daß** durch ein geeignetes Verfahren die Liftachsstellung erkannt wird, und der Wert für die Bremsdruckdifferenz (ΔP) bei abgesenkter Liftachse höher als bei angehobener Liftachse eingestellt wird.

7. Verfahren nach Anspruch 6, **dadurch gekennzeichnet, daß** in die Ermittlung des Wertes für die Bremsdruckdifferenz (ΔP) bei abgesenkter Liftachse der Quotient

$$\frac{\text{Achslast Liftachse + Achslast Antriebsachse}}{\text{Achslast Antriebsachse}}$$

eingeht.

**8.** Verfahren nach einem oder mehreren der Ansprüche 1 bis 7, **dadurch gekennzeichnet, daß** zusätzlich auch die Differenz ($\Delta$P) der Bremsdrücke der Räder der Hinterachse oder Hinterachsen begrenzbar ist.

**Claims**

**1.** Method of damping yaw moment in an antilock braking system (ABS) in a vehicle, the brake pressures ($P_B$) of the wheels (7) being detected by means of pressure sensors (6), and the ABS electronics (9) being so influenced by the output signals of the pressure sensors (6) that a brake pressure differential ($\Delta$P) between the brake pressure progressions on the high wheel and the low wheel of the steering axle is not on average exceeded, **characterized in that** the brake pressure differential ($\Delta$P) is calculated by the ABS electronics (9) in dependence on the peak regulation pressures ($P_{max}$) of the vehicle wheels on which ABS control is in operation, the brake pressure differential ($\Delta$P) being proportional to the sum of the peak regulation pressures ($P_{max}$) of the two wheels of the rear axle.

**2.** Method according to claim 1, **characterized in that** the brake pressure differential ($\Delta$P) is proportional to the sum of the peak regulation pressures ($P_{max}$) of the two wheels of the rear axle and twice the value of the peak regulation pressure ($P_{max}$) of the low wheel of the steering axle.

**3.** Method according to one or more of claims 1 to 2, **characterized in that** the permissible brake pressure of the high wheel of the steering axle is calculated as the sum of the peak regulation pressure ($P_{max}$) on the low wheel of the steering axle and the calculated brake pressure differential ($\Delta$P).

**4.** Method according to one or more of claims 1 to 2, **characterized in that** the permissible brake pressure of the high wheel of the steering axle is calculated as the sum of the brake pressure on the low wheel of the steering axle and the calculated brake pressure differential ($\Delta$P).

**5.** Method according to one or more of claims 1 to 2, **characterized in that** the permissible brake pressure of the high wheel of the steering axle is calculated at the start of ABS control as the sum of the brake pressure on the low wheel of the steering axle and the calculated pressure differential and, after a specific predeterminable period, as the sum of the peak regulation pressure ($P_{max}$) of the low wheel of the steering axle and the calculated brake pressure differential ($\Delta$P).

**6.** Method according to one or more of claims 1 to 5, in a vehicle having a lift axle, **characterized in that** the position of the lift axle is detected by a suitable method and the value for the brake pressure differential ($\Delta$P) is adjusted to be higher when the lift axle is in the lowered position than when the lift axle is in the raised position.

**7.** Method according to claim 6, **characterized in that** the quotient

$$\frac{\text{axle load lift axle + axle load drive axle}}{\text{axle load drive axle}}$$

is used to determine the value for the brake pressure differential ($\Delta$P) when the lift axle is in the lowered position.

**8.** Method according to one or more of claims 1 to 7, **characterized in that** in addition the difference ($\Delta$P) between the brake pressures of the wheels of the rear axle(s) can also be limited.

**Revendications**

**1.** Procédé d'amortissement du couple d'embardée dans un système antiblocage (ABS) dans un véhicule, les pressions de freinage (PB) des roues (7) étant détectées au moyen de capteurs de pression (6), et le système électronique ABS (9) étant influencé de telle sorte par les signaux de sortie des capteurs de pression (6) qu'une différence de pression de freinage ($\Delta$P) n'est pas dépassée en moyenne entre les allures de pression sur la roue rapide et sur la roue lente de l'essieu directeur, **caractérisé en ce que** la différence de pression de freinage ($\Delta P$) est calculée par le système électronique ABS (9) en fonction des pressions de régulation ($P_{max}$) des roues du véhicule, sur lesquelles une régulation ABS est en cours, et **en ce que** la différence de pression de freinage ($\Delta P$) est proportionnelle à la somme des pressions de régulation ($P_{max}$) des deux roues de l'essieu arrière.

2. Procédé selon la revendication 1, **caractérisé en ce que** la différence de pression de freinage ($\Delta P$) est proportionnelle à la somme des pressions de régulation ($P_{max}$) des deux roues de l'essieu arrière et au double de la valeur de la pression de régulation ($P_{max}$) de la roue lente de l'essieu directeur.

3. Procédé selon l'une ou l'autre des revendications 1 et 2, **caractérisé en ce que** la pression de freinage admissible de la roue rapide de l'essieu directeur est calculée comme la somme de la pression de régulation ($P_{max}$) sur la roue lente de l'essieu directeur et de la différence de pression de freinage ($\Delta P$) calculée.

4. Procédé selon l'une ou plusieurs des revendications 1 à 3, **caractérisé en ce que** la pression de freinage admissible de la roue rapide de l'essieu directeur est calculée comme la somme de la pression de freinage sur la roue lente de l'essieu directeur et de la différence de pression de freinage ($\Delta P$) calculée.

5. Procédé selon l'une ou l'autre des revendications 1 et 2, **caractérisé en ce que** la pression de freinage admissible de la roue rapide de l'essieu directeur est calculée au début d'une régulation ABS comme la somme de la pression de freinage sur la roue lente de l'essieu directeur et de la différence de pression calculée, et après un temps prédéterminé comme somme de la pression de régulation ($P_{max}$) de la roue lente de l'essieu directeur et de la différence de pression de freinage ($\Delta P$) calculée.

6. Procédé selon l'une ou plusieurs des revendications 1 à 5, pour un véhicule avec essieu élévateur, **caractérisé en ce que** grâce à un procédé approprié, on reconnaît la position de l'essieu élévateur, et lorsque l'essieu élévateur est abaissé, la valeur pour la différence de pression de freinage ($\Delta P$) est réglée plus haute que lorsque l'essieu élévateur est levé.

7. Procédé selon la revendication 6, **caractérisé en ce que** le quotient

$$\frac{\text{Charge de l'essieu élévateur + charge de l'essieu moteur}}{\text{Charge de l'essieu moteur}}$$

est utilisé pour déterminer la valeur pour la différence de pression de freinage ($\Delta P$) lorsque l'essieu élévateur est abaissé.

8. Procédé selon l'une ou plusieurs des revendications 1 à 7, **caractérisé en ce qu'**additionnellement, la différence ($\Delta P$) des pressions de freinage des roues de l'essieu arrière ou des essieux arrière est aussi susceptible d'être limitée.

Fig.1

Fig.2